# EUROPÄISCHE PATENTSCHRIFT

(11) **EP 2 411 578 B1**
(45) Veröffentlichungstag und Bekanntmachung des Hinweises auf die Patenterteilung: **06.05.2015**
(21) Anmeldenummer: 10709231.4
(22) Anmeldetag: 19.03.2010
(51) Int. Cl.: D21D 5/26, B01D 19/00, B01D 19/04, C07C 69/24, D21H 17/14, D21H 17/53, D21H 21/12, D21H 17/06

(54) **VERFAHREN ZUM ENTSCHÄUMEN UND/ODER ENTLÜFTEN VON PROZESSFLÜSSIGKEITEN EINER PAPIERMASCHINE**
METHOD FOR DEFOAMING AND/OR DE-AERATING PROCESS FLUIDS IN A PAPER MACHINE
PROCÉDÉ DE DÉMOUSSAGE ET/OU D'AÉRATION DE LIQUIDES DE PROCESSUS D'UNE MACHINE À PAPIER

(30) Priorität: 26.03.2009 EP 09156273
(43) Veröffentlichungstag der Anmeldung: 01.02.2012
(73) Patentinhaber: Dr. W. Kolb AG, 8908 Hedingen (CH)
(72) Erfinder: NÄGELI, Ivo, 8027 Zürich (CH); BLICKENSTORFER, Christoph, 8057 Zürich (CH); KELLENBERGER, Daniel, 8911 Rifferswil (CH); HÄUSLER, Christoph A., 6340 Baar (CH); BAUMANN, Andreas, 9063 Stein (CH); SHAIK, Jeelani, 8053 Zürich (CH); WINDHAB, Erich J., 8261 Hemishofen (CH)
(74) Vertreter: Bremi, Tobias Hans
(86) Internationale Anmeldenummer: PCT/EP2010/053592
(87) Internationale Veröffentlichungsnummer: WO 2010/108859

(56) Entgegenhaltungen:
- EP-A- 0 322 830
- EP-A- 2 060 674
- DE-A1- 4 127 719

## Beschreibung

### TECHNISCHES GEBIET

Die vorliegende Erfindung betrifft ein Verfahren zur Zuführung eines Mittels zur Entlüftung/Entschäumung einer Prozessflüssigkeit insbesondere in einer Papiermaschine. Des weiteren beschreibt das Dokument eine Vorrichtung zur Durchführung eines solchen Verfahrens.

### STAND DER TECHNIK

Infolge der in den Prozessflüssigkeiten einer Papiermaschine enthaltenen Substanzen und Bestandteile wie Zellulosefasern, Füllstoffe, Stärke und Leimungsmittel, Salze und andere Additive etc. und infolge der zum Teil erheblichen Agitation der Prozessflüssigkeiten, einerseits gezielt zur Erzeugung einer homogenen Suspension und andererseits im Rahmen der Führung der Prozessflüssigkeiten, bildet sich sowohl auf den Prozessflüssigkeiten schwimmender Schaum, als auch unangenehm stabile Luftblasen in der Flüssigkeit. Analog gilt dies für andere industrielle Verfahren so z.B. im Rahmen der pharmazeutischen Produktion und der Fermentation.

Sowohl dieser Schaum als auch die Luftblasen im Prozesswasser führen zu technologischen Problemen, so beispielsweise zu einer Reduktion der Effizienz von Pumpen, einer Reduktion der Effizienz bei Waschvorgängen oder Trocknungsvorgängen, einer schlechten Blattbildung infolge der unzuverlässigen Ablagerung von Fasern und einer damit verbundenen reduzierten Stärke respektive Reissfestigkeit des gebildeten Papiers, sowie zu einer schlechten Oberfläche des Papiers infolge der darauf direkt oder indirekt sichtbaren respektive abgebildeten Blasen, welche häufig erst bei der Blattbildung auf der Oberfläche aufbrechen.

Um dies zu verhindern, wird typischerweise der Prozessflüssigkeit in einem technologischen Prozess ein Mittel zugegeben, welches die Schaumbildung verhindert respektive gebildeten Schaum abzubauen in der Lage ist, und/oder welches die Flüssigkeit entlüftet, das heisst welches in der Lage ist, in der Prozessflüssigkeit vorhandene Luftblasen zu entfernen. Eine andere Möglichkeit besteht darin, die Prozessflüssigkeit mechanisch zu behandeln, beispielsweise indem der Schaum durch Aufsprühen von Flüssigkeit aufgebrochen wird oder durch andere mechanische Verfahren wie z.B. mit Hilfe von Vakuum (Stoffentlüfter). Häufig werden die chemischen und physikalischen Methoden kombiniert verwendet.

Die so genannten chemischen Methoden unter Verwendung der oben angegebenen Mittel (im englischen als defoamers respektive antifoams bezeichnet) basieren in ihrer Wirkungsweise auf unterschiedlichen Effekten, so unter anderem auf der Beeinflussung der Oberflächenspannung aber auch auf der Zusammenführung der Blasen und Förderung der Koaleszenz derselben, was zur Ausbildung von grösseren Blasen führt, welche dann nach oben aus der Flüssigkeit austreten.

Die entsprechenden Mittel, wie sie im Moment bei solchen Prozessen Anwendung finden, können in drei Gruppen eingeteilt werden: (i) Öl-basierte Mittel (beispielsweise Silikonöl oder Mineralöl); (ii) Wasser-basierte Mittel (beispielsweise Fettalkohol); (iii) oberflächenaktive Mittel (beispielsweise Blockcopolymer). Im Moment finden in der Hauptsache Mittel Anwendung, bei welchen der eigentliche Wirkstoff in Form einer Suspension in Wasser vorliegt. Eine solche Suspension wird beispielsweise erzeugt, indem eine Substanz, welche bei Raumtemperatur fest ist, auf erhöhte Temperatur gebracht und verflüssigt wird und dann in Wasser in Anwesenheit von Stabilisatoren etc. emulgiert wird. Anschliessend wird die Emulsion abgekühlt, wobei sich die emulgierten Tropfen verfestigen und sich eine Suspension (fest in flüssig) ausbildet.

Solche Mittel in Form von Suspensionen sind aber infolge des aufwändigen Herstellungsverfahrens, der Probleme mit der Lagerung (Stabilisatoren notwendig, Temperaturempfindlichkeit) mit hohen Kosten und der Bereitstellung von aufwändigen Rahmenbedingungen verbunden. Alternativen dazu bestehen im Prinzip insbesondere im Zusammenhang mit der genannten Gruppe (iii), problematisch dabei ist aber, dass bei der Zugabe des entsprechenden Konzentrates zum Prozesswasser eine im Vergleich zu den Suspensionen oft niedrigere Wirksamkeit insbesondere bei der Entlüftung festgestellt wird.

### DARSTELLUNG DER ERFINDUNG

Der Erfindung liegt demnach die Aufgabe zugrunde, ein verbessertes Verfahren zur Zuführung eines Mittels zur Entlüftung/Entschäumung zu einer Prozessflüssigkeit, insbesondere in einer Papiermaschine, oder aber z.B. auch in einem Zellstoffwerk, in einer Stoffaufbereitung, in einer Wasseraufbereitung, oder in einer Deinking-Anlage, zur Verfügung zu stellen.

Die Lösung dieser Aufgabe wird dadurch erreicht, dass das Mittel vor Ort unter Zuhilfenahme wenigstens eines Mischelementes in Wasser emulgiert und der Prozessflüssigkeit innerhalb weniger als 24 h, bevorzugt weniger als 6 h, insbesondere bevorzugt weniger als 3 h, und wenn möglich sogar innerhalb von weniger als 30 Minuten nach dem Emulgierprozess zugegeben wird. Wesentlich ist dabei, dass die Anlieferung des Mittels nicht als Dispersion respektive Suspension erfolgt sondern als entweder Feststoff (Pellets, Granulat etc.) oder in aufgeschmolzener Form (das heißt geheizter Transport vom Hersteller zum Endverbraucher, das heißt zum Papierhersteller, sowie geheizte Lagerung beim Endverbraucher, das heißt beim Papierhersteller). Das Mittel verfügt dabei über einen Schmelzpunkt von wenigstens 40 °C. Es hat sich nämlich gezeigt, dass dann, wenn ganz spezifisch Mittel mit einem solchen Schmelzpunkt (einfach ermittelbar mit Standard DSC-Methoden) eingesetzt werden, auch sogar wenn zwischen dem Emulsionsprozess und der eigentlichen Zuführung in das Prozesswasser mehr als 5 min verstreichen, eine genügende Wirkung erzielt werden kann.

Ein zusätzlicher Vorteil besteht darin, dass, weil beim hier vorgeschlagenen Verfahren keine Langzeitstabilisierung gewährleistet werden muss und entsprechend auf Stabilisatoren und Konservierungsmittel verzichtet werden kann, solche Komponenten gar nicht eingesetzt werden müssen. Dies ist einerseits hinsichtlich der ökologischen Anforderungen vorteilhaft, andererseits aber auch hinsichtlich der Kosten und hinsichtlich der immer möglichen negativen Wechselwirkung von solchen weiteren Additiven mit anderen Komponenten im Prozesswasser. Es sei also insbesondere darauf hingewiesen, dass bevorzugtermassen das Mittel frei von all jenen Bestandteilen ist, welche normalerweise für eine Langzeitstabilität (Transport vom Hersteller zum Endbenutzer) erforderlich sind. Entsprechend ist das Mittel bevorzugtermassen im wesentlichen frei von Verdicker, Emulgator, Konservierungsmittel, Eigenschaumunterdrückung, Lauge/Säure zur Einstellung des pH Werts. Bevorzugtermassen einziges mögliches Additiv zur eigentlichen wirksamen Komponente (Entschäumer, Entlüfter) respektive Mischung aus wirksamen Komponenten ist das weiter unten erläuterte Additiv zur Erhöhung der Schmelztemperatur.

Ein weiterer wichtiger Vorteil des vorgeschlagenen Verfahrens besteht darin, dass überraschenderweise einerseits festgestellt wurde, dass das Mittel, wenn es nicht als Konzentrat sondern in kontrolliert emulgierter Form zugegeben wird, eine wesentlich höhere Effizienz bei der Entlüftung/Entschäumung zeigt. Unter dem Begriff "Emulsion" wird dabei ein System von Tröpfchen aus wenigstens einer mit Wasser nicht mischbaren, typischerweise hydrophoben Substanz, namentlich dem Mittel zur Entlüftung/Entschäumung, in Wasser verstanden. Die Tröpfchen verfügen dabei über einen mittleren Durchmesser (Median, d₅₀) von höchstens 150 µm, bevorzugt von höchstens 100 µm. Ein weiterer Vorteil des vorgeschlagenen Verfahrens besteht darin, dass es im wesentlichen, wie dies auch gemäss einer ersten Ausführungsform vorgeschlagen wird, im wesentlichen ohne oder mit Wesentliche reduzierter Zugabe und/oder Anwesenheit von Emulgier- und/oder DispergierHilfsmittel und/oder Emulsions- und/oder Dispersionsstabilisator durchgeführt wird. Normalerweise erfordert nämlich die Herstellung einer Emulsion zusätzlich die Anwesenheit von entsprechenden Hilfsmitteln, damit die Emulsion überhaupt nach deren Erzeugung erhalten bleibt, da normalerweise das emulgierte Mittel die Tendenz hat, zu aggregieren und letzten Endes zu einem Film an der Oberfläche des Wassers zu werden. Dies ist beim vorgeschlagenen Verfahren nicht erforderlich, was als weiterer grosser Vorteil zu werten ist, da typischerweise solche Hilfsmittel einerseits auch in Wechselwirkung mit anderen Prozessen treten können und entsprechend mit Vorsicht zu handhaben sind, und andererseits in Bezug auf die Umweltbelastung kritisch sein können.

Für die Effizienz insbesondere was die Wirkung als Entlüfter angeht, ist unerwarteterweise eine spezifische mittlere Tröpfchengrösse des emulgierten Mittels gemäss einer weiteren Ausführungsform besonders geeignet. Namentlich zeigt es sich, dass eine hervorragende Wirkung gewährleistet werden kann, wenn im Mischelement eine mittlere Töpf chengrösse (Median, d₅₀) der in der Emulsion vorhandenen emulgierten Tropfen im Bereich von 0.1-80 µm, bevorzugt im Bereich von 0.5-50 µm erzeugt wird. Ganz besonders gute Resultate können erzeugt werden, wenn die mittlere Töpfchengrösse im Bereich von 1-10 µm, bevorzugt im Bereich von 2-5 µm liegt.

Ebenfalls wichtig kann die "Härte" der emulgierten Tropfen im Wasser sein. Es wurde nämlich unerwarteterweise gefunden, dass, wenn die emulgierte Flüssigkeit eine zu niedrige Viskosität aufweist, die zur Koaleszenz der Blasen führende Überbrückung der Luftblasen durch den Tropfen nicht effizient oder gar nicht abläuft.

Gemäß einer weiteren bevorzugten Ausführungsform hat das Mittel einen Schmelzpunkt von wenigstens 45 °C, bevorzugtermassen einen Schmelzpunkt von wenigstens 50 °C. Je nach Temperatur im Prozesswasser erweisen sich dabei unterschiedliche minimale Schmelzpunkte als optimal. Es zeigt sich, dass der Schmelzpunkt des Mittels bevorzugtermassen wenigstens gleich hoch sein sollte wie die Temperatur im Prozesswasser, bevorzugtermassen ist der wenigstens 5 °C höher als die Temperatur im Prozesswasser oder sogar wenigstens 10 °C höher als die Temperatur im Prozesswasser. Liegt beispielsweise im Prozesswasser eine Temperatur von 50 °C vor, so sollte das Mittel eine Schmelztemperatur von wenigstens 50 °C, vorzugsweise von wenigstens 55 °C aufweisen.

Die Einstellung des Schmelzpunkts des Mittels erfolgt einerseits durch die Auswahl der chemischen Struktur der eingesetzten Komponente oder, wenn es sich beim Mittel um ein Gemisch aus verschiedenen Substanzen handelt, indem entsprechende Substanzen eingesetzt werden. Entsprechend ist es gemäß einer weiteren bevorzugten Ausführungsform möglich, dass das Mittel einer wirksamen Komponente oder aus einem Gemisch von wirksamen Komponenten mit einem Additiv zur Erhöhung des Schmelzpunkts besteht. Es kann also beispielsweise eine wirksame Komponente vorgelegt werden, welche einen Schmelzpunkt von weniger als 40 °C aufweist, und über das genannte Additiv in der Mischung sichergestellt werden, dass der Schmelzpunkt des gesamten Mittels wenigstens 40 °C beträgt.

Beim Additiv zur Erhöhung des Schmelzpunkt kann es sich um einen Ester oder ein Amid handeln oder ein Gemisch solcher Substanzen. Insbesondere kann es sich um eine oder mehrere Substanzen ausgewählt aus der folgenden Gruppe handeln: Polyolester von langkettigen Fettsäuren, wie z.B.
mono-, di-, tri-, tetra-Fettsäure-Pentaerythrit-ester,
mono-, di-, tri-Fettsäure-Glycerinester,
mono-, di-, tri-Fettsäure-Trimethylolpropan-ester,
mono-, di-, tri-, tetra-, penta-, hexa-Fettsäure-Sorbitol-ester,
insbesondere Pentaerythritmonobehenat, Pentaerythritdibehenat, Pentaerythrittribehenat, Glycerinmonobehenat, oder aber auch Fettsäureamide wie z.B. Behenamid, Ethylendisterayldiamid.

Eine weitere bevorzugte Ausführungsformen ist dadurch gekennzeichnet, dass das Mittel im wesentlichen aus einem oder mehreren (linearen im wesentlichen gesättigten) Fettalkoholen besteht, gegebenenfalls in Kombination mit einem Additiv zur Erhöhung des Schmelzpunkt wie oben erläutert. Dabei haben bevorzugtermassen mehr als 50 Gewichtsprozent der Fettalkohole des Mittels, insbesondere bevorzugtermassen mehr als 70 Gewichtsprozent, ganz besonders bevorzugterweise mehr als 90 Gewichtsprozent der Fettalkohole eine Kettenlänge mit wenigstens 16 Kohlenstoffatomen, insbesondere bevorzugt mit wenigstens 18 Kohlenstoffatomen.

Ganz besonders bevorzugt werden dabei lineare gesättigte Fettalkohole mit 20, 22, 24 oder 26 Kohlenstoffatomen oder Mischungen aus solchen Fettalkoholen eingesetzt, da dann für die typischen Prozesstemperaturen bei den Prozesswässern in Papiermaschinen auf Zusatz von den genannten Additiven zur Erhöhung des Schmelzpunkt unter Umständen vollständig verzichtet werden kann.

Gemäß einer weiteren bevorzugten Ausführungsform beinhaltet das Mittel eine Komponente mit folgender Struktur:

A-(XO)ₙ-B,

wobei diese Komponente das Anlagerungsprodukt von XO ausgewählt aus der Gruppe Ethylenoxid (EO) und/oder Propylenoxid (PO), mit n im Bereich von 1-10 an einen linearen gesättigten Alkylalkohol A ausgewählt aus der folgenden Gruppe ist: Stearylalkohol, Arachidylalkohol, Behenylalkohol oder einer Mischung dieser Alkohole, verestert mit einer linearen gesättigten Carbonsäure B ausgewählt aus der folgenden Gruppe: Stearinsäure, Arachinsäure, Behensäure oder einer Mischung aus diesen Carbonsäuren, wobei bevorzugtermassen n im Bereich von 2-6 liegt, wobei vorzugsweise n = 3, und wobei weiterhin bevorzugtermassen die Anzahl Kohlenstoffatome der Gruppen A und B nicht gleich ist oder dass es sich bei A um Behenylalkohol handelt und bei B um Behensäure, und wobei insbesondere bevorzugtermassen n = 6, A Stearylalkohol und B Behensäure ist.

Typischerweise liegen die technischen Ausgangsmaterialien, das heißt Stearylalkohol, Arachidylalkohol, Behenylalkohol sowie Stearinsäure, Arachinsäure, Behensäure als Mischungen vor. Wenn entsprechend im Anspruch von einer Mischung dieser Materialien die Rede ist, so wird unter anderem darauf Bezug genommen. Des weiteren sei insbesondere im Zusammenhang mit Stearylalkohol respektive Stearinsäure darauf hingewiesen, dass hier die technischen Produkte in der Mischung auch kürzere Kettenlängen aufweisen können. So ist beispielsweise der technische Stearylalkohol eine Mischung aus circa 30 % Palmitylalkohol (C16) und 70 % Stearylalkohol (C18). Auch eine Komponente, welche ausgehend von einem solchen technischen Stearylalkohol hergestellt ist, beinhaltet, und zwar in der Hauptsache, die Komponente A-(XO)ₙ-B wie oben definiert, es ist ja nicht ausgeschlossen, dass das Mittel weitere Komponenten beispielsweise als Reaktionsprodukt des Palmitylalkohols, beinhaltet.

Es zeigt sich, dass es von Vorteil ist, wenn insbesondere bei der Verwendung im Rahmen der Prozessflüssigkeit in einer Papiermaschine nach dem Mischelement in der Emulsion das Mittel zur Entlüftung/Entschäumung in Wasser in einer Konzentration von 0.1-80 Gewichtsprozent, bevorzugt 1-50, insbesondere bevorzugt 2 - 15 Gewichtsprozent vorliegt.

Die endgültige Konzentration des Mittels in der emulgierten Form in der Prozessflüssigkeit d.h. nach der Zugabe kann auf die erforderliche Wirkung und die allgemeinen Rahmenbedingungen eingestellt werden. Im Zusammenhang mit Prozessflüssigkeiten in einer Papiermaschine, welche z.B. Fasern enthalten (beispielsweise Pulpe, Dickstoff, Dünnstoff, Siebwasser), erweist es sich als vorteilhaft, wenn das Mittel zur Entlüftung/Entschäumung einer Prozessflüssigkeit mit Fasergehalt in einer Menge zugegeben wird, dass gewichtsmässig bezogen auf Fertigstoff je Produktionsschritt das Mittel im Bereich von 10-350ppm (auf das Gewicht bezogen wobei das Mittel als Feststoff in Bezug gesetzt wird mit dem Prozesswasser), bevorzugt im Bereich von 30-200 ppm, insbesondere bevorzugt im Bereich von 60-150 ppm zugegeben wird, jeweils pro betrachtete Zeiteinheit. Unter Fertigstoff (z.B. in t/h) ist das aus dem Prozess resultierende Rohpapier zu verstehen, und das Mittel wird dann angepasst zugegeben (z.B. in kg/h).

Grundsätzlich können unterschiedliche Mischelemente verwendet werden. Bevorzugtermassen handelt es sich bei Mischelement aber um einen Turbulenz-Mischer, ganz bevorzugt um einen Turbulenzmikromischer. Gleichermassen kann es sich um eine Düse handeln, insbesondere eine Mikrostrahldispergierdüse. Auch möglich ist ein magnetisches Element, eine Kugelpackung oder ein statischer Mischer oder eine Kombination der genannten Mischelemente, beispielsweise in Serie.

Gemäss einer weiteren Ausführungsform wird im Mischelement eine Tröpfchengrössenverteilung der in der Emulsion vorhandenen emulgierten Tropfen erzeugt, bei welcher wenigstens 70 %, bevorzugt wenigstens 80 %, insbesondere bevorzugt wenigstens 90 % der Anzahl der Tropfen um eine mittlere Tröpfchengrösse d₅₀ (Median) in einem Bereich zwischen d₅₀/10 bis d₅₀*10 verteilt sind. Bei einer mittleren Tröpfchengröße d₅₀ von wie bevorzugt beispielsweise 4 µm liegen also vorzugsweise 90% der Tropfen in einem Bereich zwischen 0.4 µm und 40 µm.

Eine weitere bevorzugte Ausführungsform ist dadurch gekennzeichnet, dass es sich beim Mittel um eine oder eine Mischung von mit Wasser im wesentlichen nicht mischbaren Substanz (en) handelt (typischerweise mit einer Löslichkeit in Wasser bei 25°C von höchstens 10 g pro Liter, bevorzugt höchstens 5 g pro Liter, insbesondere bevorzugt 1 g pro Liter). Es handelt sich also typischerweise um hydrophobe Systeme, bevorzugt werden beispielsweise oberflächenaktive Substanzen, bevorzugt nicht-ionische oberflächenaktive Systeme.

Dabei kann z.B. wenigstens eine der Komponenten eine ethoxylierte und/oder propoxylierte und/oder butoxylierte Struktur aufweist, und/oder eine Esterstruktur aufweisen, bevorzugtermassen eine Sorbitanesterstruktur, eine Glykolesterstruktur, und/oder eine Polyethylenglykolstruktur, und/oder eine Polypropylenglykolstruktur und/oder eine Fettalkohol-Struktur.

Generell sind Ester-Strukturen möglich wie beispielsweise Polyolester, wie Trimethylpropanester, Glycerinester, Glykolester, Pentaerythritester, Fettsäure-Fettalkohol-Ester, zuckerartige Ester etc. Es sind aber auch allgemein ölige Systeme möglich wie beispielsweise auf Basis von Glycerolen. Ebenfalls möglich sind Disäureester wie beispielsweise Adipinsäureester, Zitronensäure-Ester etc. Möglich sind des weiteren, wie oben bereits angedeutet, Ether-Systeme wie beispielsweise propoxylierte, ethoxylierte und/oder butoxylierte Systeme (auch entsprechende Mischformen) so beispielsweise auf Esterbasis (z.B. Esterethoxylate (EO-Ester), Esterpropoxylate (PO-Ester), EO-PO-Ester, Fettsäureethoxylate (EO-FSE), PO-FSE, EO-PO-FSE, etc.).

Das Mittel kann in einem Lagertank in flüssiger Form bereitgehalten werden, das heißt bei einer Temperatur von mehr als 40 °C angepasst an den Schmelzpunkt des Mittels. Generell wird das flüssig bereitgehaltene Mittel anschließend über geheizte Leitungen (auf einer Temperatur sehr nahe bei, bevorzugt oberhalb des Schmelzpunktes des Mittels) dem bevorzugtermassen ebenfalls geheizten Mischelement zugeführt. Das dem Mischelement zugeführte Wasser kann ebenfalls vorgeheizt sein, beispielsweise auf eine Temperatur im Bereich der Schmelztemperatur des Mittels. Es ist möglich, hinter dem Mischelement anschließend Elemente zur Kühlung vorzusehen und dadurch eine Stabilisierung der Emulsion, welche dann in der Regel zu einer Suspension wird, zu bewirken.

Alternativ ist es möglich, das Mittel generell als Feststoff, beispielsweise als Pulver, Granulat und/oder in Form von Pellets, bereitzuhalten (möglich und bei Gewissensubstanzen bevorzugt ist beispielsweise ein Pulver/Granulat mit einer durchschnittlichen Partikelgröße im Bereich von 0.5 mm), diesen Feststoff bedarfsentsprechend aufzuschmelzen und anschließend über bevorzugtermassen geheizte Leitungen dem bevorzugtermassen ebenfalls geheizten Mischelement zuzuführen. Wie bereits oben erläutert kann auch das zugeführte Wasser vorgeheizt sein und hinter dem Mischelement können Mittel zur Kühlung vorgesehen sein.

Wird eine Lagerung im festen oder flüssigen Zustand vorgesehen, und handelt es sich um ein Mittel, welches mit einem zusätzlichen Additiv zur Erhöhung der Schmelztemperatur versetzt werden muss, ist es auch möglich, die eigentliche wirksame Komponente (kann auch ein Gemisch sein) und das Additiv in zwei getrennten Behältern vor Ort bereitzuhalten und die beiden Feststoffe erst vor der Herstellung der Emulsion zusammenzuführen.

Gemäß einer weiteren bevorzugten Ausführungsform ist es möglich, das für die Bereitstellung des Mittels als Emulsion erforderliche Wasser direkt aus dem Prozesswasser zu beziehen. Als Quelle für das Wasser kann also der Prozesswasser-Strom eingesetzt werden. Das Prozesswasser kann dabei entweder direkt und ohne spezifische Aufbereitung eingesetzt werden, es kann aber auch vorgängig gefiltert oder sonst gereinigt werden. Auf jeden Fall ist vorteilhafter Weise das Prozesswasser bereits in einem durch den Prozess vorgewärmten oder sogar genügend aufgewärmtem Zustand, was entsprechend dann eine vollständige Aufwärmung für den Emulsionsprozess erübrigen kann.

In der vorliegenden Erfindung wird eine Vorrichtung zur Durchführung eines Verfahrens, wie es oben beschrieben wurde eingesetzt. Eine solche Vorrichtung ist bevorzugtermassen dadurch gekennzeichnet, dass die Vorrichtung wenigstens einen Behälter (dieser Behälter kann für eine Lagerung im flüssigen Zustand ein beheizter Behälter sein) oder eine Zuleitung zur Bereitstellung des Mittels zur Entlüftung/Entschäumung aufweist sowie wenigstens einen Behälter oder eine Zuleitung zur Bereitstellung von Wasser, sowie wenigstens ein von diesen beiden gespiesenes Mischelement zur Erzeugung einer Emulsion sowie wenigstens eine Einführungsleitung in geeigneter Kürze (oder Fördergeschwindigkeit), zur im wesentlichen unmittelbar nach dem Emulgierprozess erfolgenden Zugabe zur Prozessflüssigkeit. Bevorzugtermassen sind bei einer solchen Vorrichtung die Leitungen zwischen dem Lagerungsbehälter des Mittels und dem Mischelement beheizbar. Handelt es sich um einen Lagerungsbehälter für Mittel im festen Aggregatszustand (Pellets, Granulat) so sind bevorzugtermassen die Leitungen zwischen der Einheit zum Aufschmelzen des Mittels und dem Mischelement beheizbar auf eine Temperatur von wenigstens der Schmelztemperatur des Mittels.

Weitere bevorzugte Ausführungsformen der Erfindung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:

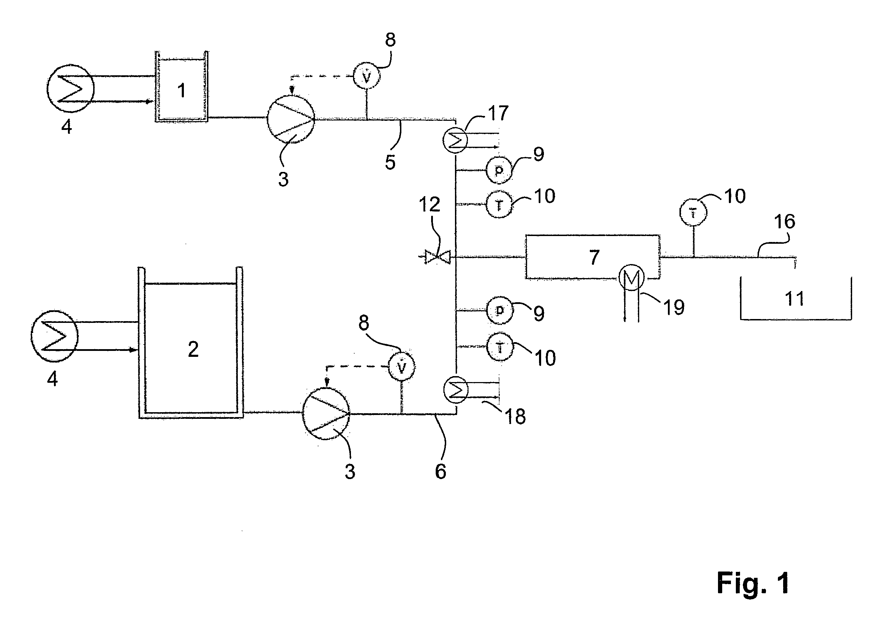

- Fig. 1: eine schematische Darstellung einer Anlage zur Durchführung des vorgeschlagenen Verfahrens;

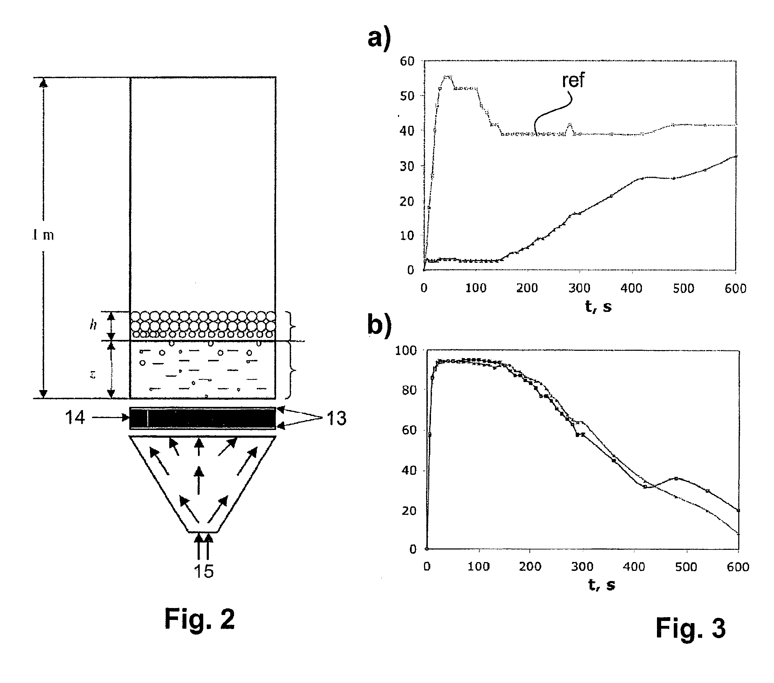

- Fig. 2: eine Versuchsanordnung zur Ermittlung der Entschäumungswirkung;
- Fig. 3: Messwerte zu Entschäumungswirkung, wobei in a) der Unterschied zwischen einer Versuchsdurchführung ohne Zugabe von Mittel (mit ref bezeichnet) und einer Versuchsdurchführung mit Zugabe von Mittel dargestellt ist, wobei die Schaumhöhe in Zentimetern als Funktion der Zeit in Sekunden angegeben ist und in b) die durch die Differenz dieser beiden Versuche erzeugte Differenzdarstellung (Doppelbestimmung), wobei die Luft-Reduktion in Prozent als Funktion der Zeit in Sekunden dargestellt ist;

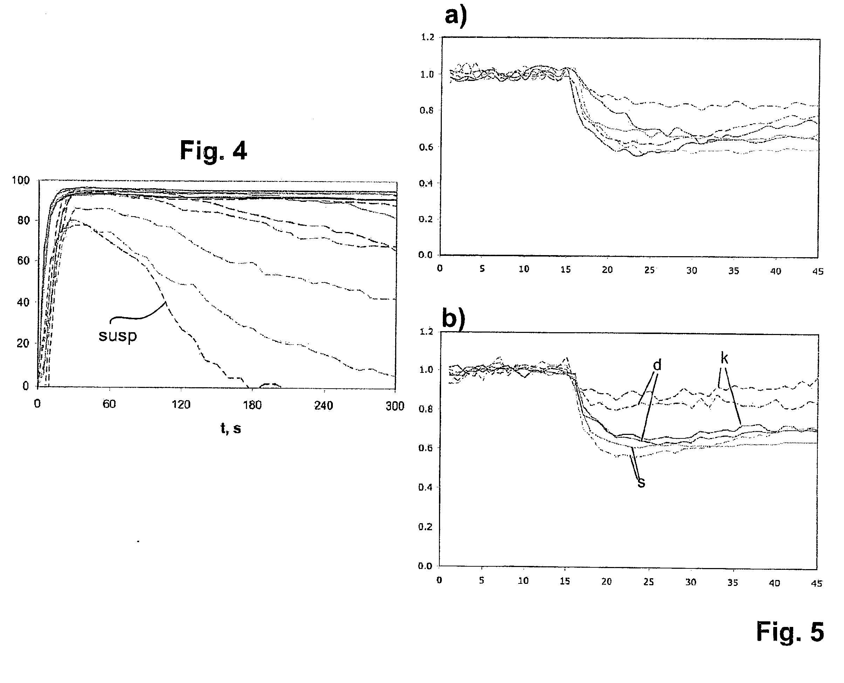

- Fig. 4: Messwerte zum Vergleich von unterschiedlichen Mitteln (Luftreduktion in Prozent als Funktion der Zeit in Sekunden), wobei gestrichelte Linien als Konzentrat zugegebene Mittel darstellen und ausgezogene Linien als Emulsionen zugegebene Mittel, das einzige als Suspension zugegebene Mittel ist mit susp gekennzeichnet; und
- Fig. 5: Messwerte zum Vergleich von unterschiedlichen Mitteln in einem Versuch zur Ermittlung des Luftgehaltes (prozentualer relativer Luftgehalt als Funktion der Zeit in Minuten), wobei in a) auf die Fasern bezogen immer eine gleiche Konzentration an Mittel zugegeben wurde, und wobei gestrichelte Linien als Konzentrat zugegebene Mittel darstellen und ausgezogene Linien als Emulsionen zugegebene Mittel, und wobei in b) gestrichelte Linien eine Konzentration von 125 ppm bezeichnen und ausgezogene Linien eine Konzentration von 375 ppm, und wobei mit d bezeichnete Linien für die Emulsionen angegeben sind, mit k bezeichnete Linien für die konzentrierte Zugabe angegeben sind, und mit s bezeichnete Linien für die Suspension angegeben sind.

### WEGE ZUR AUSFÜHRUNG DER ERFINDUNG

In der Folge soll anhand der Beschreibung von experimentellen Nachweisen gezeigt werden, dass das in der Einleitung beschriebene Verfahren tatsächlich hervorragende Wirkung erzeugt. Die beschriebenen Beispiele dienen der Illustration der Durchführbarkeit und der Wirksamkeit der Erfindung, sie sollen aber nicht in einschränkender Weise zur Auslegung der am Ende angefügten Schutzansprüche ausgelegt werden.

In Figur 1 ist in schematischer Weise eine Anlage zur Durchführung des vorgeschlagenen Verfahrens dargestellt. Die Anlage verfügt über einen Behälter 1 mit Entlüfter/Entschäumer. Dieser Behälter kann über eine Thermostat-Einheit 4 temperiert sein, typischerweise über eine Temperatur von 15-80°C. Werden höher schmelzende Mittel verwendet, so kann auch eine Temperierung auf eine höhere Temperatur ins Auge gefasst werden, dann muss aber darauf geachtet werden, dass auch die Leitungen wenigstens bis zum Mischer auf einer entsprechenden Temperatur gehalten werden, damit das Mittel den Mischer in flüssiger Form erreicht und in der Zuführungsleitung zum Mischer nicht erstarrt.

Wird wie oben erläutert das Mittel in fester Form dort gelagert (Pellets, Granulat), so muss nicht der gesamte Behälter mit einer Thermostat-Einheit 4 temperiert sein sondern in diesem Fall gibt es beim Ausschluss aus dem Behälter 1 eine Einheit zum Aufschmelzen des Feststoffs. Es ist auch möglich, den Feststoff bis kurz vor das Mischelement zu fördern (beispielsweise Druckluftförderung, Pfropfenförderung oder Schüttung), und eine solche Einheit zum Aufschmelzen erst kurz vor dem Mischelement anzuordnen.

Des Weiteren verfügt die Vorrichtung über einen Behälter 2 für Wasser, dieser kann aber auch ersetzt sein durch eine Wasserzuleitung. Auch der Behälter für Wasser kann über eine Thermostat-Einheit 4 temperiert werden, hier typischerweise für den Bereich einer Temperatur von 5-80°C. Die beiden Behälter 1 und 2 sind über Leitungen 5 resp. 6 mit dem Mischelement 7 verbunden. In beiden Leitungen 5, 6 ist eine Pumpe 3 angeordnet sowie möglichst auch noch ein Kontrollelement 8 zur Steuerung der Pumpe, welches bspw. die Pumpe in Abhängigkeit der Flussgeschwindigkeit regelt resp. die es erlaubt, das dem Mischer 7 zugeführte Massenverhältnis den Bedürfnisse entsprechend einzustellen. Des Weiteren sind vorzugsweise in den Leitungen 5, 6 Einheiten für die Druckmessung 9 sowie Temperaturmesseinheiten 10 angeordnet, um den Prozess zu kontrollieren.

In beiden Leitungen 5 und 6 können, wie schematisch mit den Bezugszeichen 17 und 18 dargestellt, Mittel zur Temperierung vorgesehen sein. Im Rahmen der Leitung 5 wird die Temperierung vorzugsweise so vorgenommen, dass sichergestellt wird, dass das Mittel im flüssigen Zustand verbleibt bis es in die Mischeinheit 7 eintritt. Obwohl schematisch in Figur 1 nur an einer Stelle klargestellt, wird vorzugsweise die Einheit 17 über die gesamte Leitung oder wenigstens so abschnittsweise angeordnet, dass das Mittel während des Transports im flüssigen Zustand verbleibt.

Die Einheit 18 hingegen muss nicht notwendigerweise über die gesamte Leitung eine Heizwirkung erzeugen, da beim Wasser nicht die Problematik des Erstarrens in der Leitung gegeben ist, dabei Anwendungen in einer Papiermaschine die Außentemperatur niemals unter den Gefrierpunkt sinken wird.

Es ist auch möglich, als Quelle für das Wasser für den Emulgierprozess direkt Prozesswasser zu verwenden. Dies hat unter anderem, da das Prozesswasser in der Regel prozessbedingt (beispielsweise in einer Papiermaschine) bereits erwärmt ist, den Vorteil, dass das Wasser nicht mehr vollständig aufgewärmt werden muss. Das Prozesswasser kann entsprechend dem Prozesswasserstrom der Prozessflüssigkeit entnommen werden, und kann gegebenenfalls, sofern erforderlich, bevor der Zuführung zur Mischeinheit 7 wenigstens teilweise gereinigt oder gefiltert werden.

Die beiden Leitungen 5, 6 werden entweder vor dem Mischer oder im Mischer zusammengeführt. Im Mischer wird die eigentliche Emulsion mit den oben angegebenen Tröpfchengrössenverteilungen und mittleren Tröpfchengrössen erzeugt. Bei diesem Mischer kann es sich um unterschiedliche Konstruktionen handeln, möglich sind beispielsweise: Kugelpackung, Turbulenzmikromischer, Mikrostrahl-Dispergierdüsen, magnetische Mischelemente oder statische Mischer. Sie dienen dazu, eine Emulsion mit definierter Tropfengrösse herzustellen, wobei eine enge Tropfengrösseverteilung, eine einfache Anwendung vor Ort und tiefe Kosten angestrebt sind. Die Konzentration an Mittel beträgt beispielsweise 5 Gewichtsprozent und die Durchflussrate liegt typischerweise im Bereich von 20-200 Liter pro Stunde.

Wie schematisch durch die Einheit 19 dargestellt kann auch der Mischer 7 über Mittel zur Temperierung verfügen. Hinter dem Mischer wird die erzeugte Emulsion über die Einführungsleitung 16, welche typischerweise mit zusätzlichen Kontrollmitteln wie beispielsweise einer Temperaturmessungseinheit 10 ausgestattet ist, dem Behälter mit Prozessflüssigkeit zugeführt. Dieser Behälter 11 kann irgendein Behälter oder aber auch eine Leitung für Prozessflüssigkeiten in einer Papiermaschine sein. Beispielsweise handelt es sich um eine Prozessflüssigkeit, welche Fasern enthält (beispielsweise Pulpe, Dickstoff, Dünnstoff, Siebwasser, etc.).

Was die zu emulgierenden Mittel angeht, so sind unterschiedliche chemische Grundstrukturen möglich. So bspw. ethoxylierte und/oder propoxylierte Systeme auf Basis von Rhizinusöl (welches hydriert sein kann), auf Basis von Sorbitol, Ölsäuren, generell Fettalkoholen, Glyzerolen etc. Ebenfalls möglich sind die entsprechenden Oleate, Stearate, und ähnliche übliche oberflächenaktive Tenside. Auch möglich sind reine Blockcopolymere aus Ethoxy und Propoxy Einheiten. Weitere bevorzugtermassen eingesetzte Systeme sind in der allgemeinen Beschreibung ausführlich dargelegt.

Wesentlich ist dabei, dass das Mittel (häufig ein Gemisch) in der Form, in welcher es dem Mischer 7 zugeführt wird, einen Schmelzpunkt von wenigstens 40 °C aufweist.

Zur Ermittlung der Effizienz und der Wirksamkeit des vorgeschlagenen Verfahrens wurden zwei verschiedene Versuche durchgeführt. Ein erster Versuch zielte darauf ab, die Verhinderung der Schaumbildung durch die vorgeschlagene Zugabe zu ermitteln.

Zu diesem Zweck wurde ein Versuchsaufbau verwendet, wie er in Figur 2 schematisch dargestellt ist. Eine Säule einer Höhe von 1 Meter, an deren unterem Ende eine poröse Glasfritte 14 als Boden angeordnet war, mit entsprechenden Dichtungsmitteln 13, wurde über eine Höhe z mit einer Testflüssigkeit gefüllt. Bei dieser Testflüssigkeit handelte es sich um eine Aufschlämmung von ca. 99 Gewichtsprozent heissem Wasser, ca. 1 % Cellulose-Fasersuspension, etwas Natriumsulfatlösung, etwas Stärke und etwas Polyethylenamin und hydrochlorige Säure. Die Mischung wurde gut gerührt. Es wurde ca. 1 Liter in einem derartigen Versuchsaufbau verwendet.

Von unten wurde nun über eine Druckluftzuführung 15 Luft durch die Glasfritte 14 in die Testlösung eingepresst. Dabei bildete sich eine Schaumsäule, welche mit der Höhe h charakterisiert wurde. Es wurde mit einem Gasdurchfluss von 10 Liter pro Minute gearbeitet und die Glasfritte hatte einen Porendurchmesser von 10 bis 16 Mikrometer. Dadurch wurden Luftblasen einer Grösse im Bereich von 0.8-1.4 Millimeter hergestellt und der gesamte Versuchsaufbau wurde auf einer Temperatur von ca. 50°C gehalten. Als Entlüfter wurde eine 5 gewichtsprozentige Emulsion resp. Suspension beigegeben resp. eine analoge Menge von Konzentrat. Die Emulsion wurde in einem Verfahren erzeugt, wie es weiter oben beschrieben wurde.

In Figur 3a) ist der Verlauf der Schaumhöhe in Zentimeter als Funktion der Zeit dargestellt, einerseits für eine Referenzmessung ohne Zugabe von Entschäumer/Entlüfter (als ref bezeichnet), sowie die Messung der Schaumhöhe in Zentimetern unter Zugabe eines entsprechenden Mittels. Es ist klar erkennbar, wie das Mittel, hier zugegeben als Emulsion, insbesondere am Anfang die Bildung des Schaumes zu unterdrücken in der Lage ist, und erst nach ca. zwei Minuten eine langsame Schaumbildung ansetzt.

In Figur 3b) ist dargestellt, wie zu Vergleichszwecken die Differenz aus Referenz und eigentlicher Messung, mit anderen Worten die Luftreduktion in Prozenten als Funktion der Zeit dargestellt werden kann. Diese Darstellung wurde für die Vergleiche, wie sie in Figur 4 dargestellt sind, verwendet.

In Figur 4 ist die Luftreduktion in Prozent für unterschiedliche Systeme als Funktion der Zeit, ermittelt in einem Versuchsaufbau gemäss Figur 2, dargestellt. Dabei wurden verschiedene Substanzen verwendet, wobei mit der Ausnahme der mit dem Kürzel susp angezeigten Kurve jeweils die gestrichelten Kurven für als Konzentrat zugegebene Mittel stehen (nicht nach der Erfindung) und die ausgezogenen Linien für erfindungsgemäss als Emulsion unmittelbar nach deren Herstellung zugegebene Mittel.

Aus Figur 4 kann erkannt werden, dass die klassischerweise in diesem Zusammenhang eingesetzte Suspension (fest in flüssig) eine sehr schlechte Wirkung zeigt und insbesondere nach ca. 10 Sekunden eine erhebliche Schaumbildung einsetzt. Dazu muss bemerkt werden, dass solche Suspensionen auch eher als Entlüfter und weniger als Schaumbildungsverhinderer eingesetzt werden.

Des Weiteren kann ganz klar erkannt werden, dass für die Mehrzahl der gewählten Systeme (die oben beschriebenen Systeme) die Zugabe als Konzentrat eine wesentlich schlechtere Wirkung zeigt, dies nicht nur am Anfang, das heisst im Bereich von weniger als 30 Sekunden, sondern insbesondere über längere Zeiten von mehreren Minuten. Die Schaumbildung kann entsprechend bei Zugabe von Konzentraten kaum nachhaltig verhindert werden.

Ganz anders verhält es sich bei der Zugabe der gleichen Produkte als Emulsion unter Verwendung des vorgeschlagenen Verfahrens, hier wird auch über mehrere Minuten die Schaumbildung nachhaltig reduziert, ein ähnlicher Verlauf ergibt sich auch für längere Zeiten bis 600 Sekunden.

Die Testmessungen unter Verwendung eines Aufbaus gemäss Figur 2 und die damit erhaltenen Resultate gemäss Figur 4 zeigen also, dass tatsächlich die Zugabe einer spezifisch präparierten Emulsion mit den oben angegebenen Teilchengrössenverteilungen resp. mittleren Teilchengrössen eine erhebliche Erhöhung der Effizienz des Mittels nach sich zieht. Dies erlaubt entsprechend eine stark reduzierte Zugabemenge von entsprechendem Mittel, oder es erlaubt bei gleicher Zugabemenge eine wesentlich verbesserte Effizienz der Wirksamkeit. Die entsprechenden ökologischen Vorteile sind offensichtlich.

In einem zweiten Versuchsaufbau wurde in einem Zirkulationsversuch mit einem Behälter mit Schäumungslösung wie oben beschrieben und einem Pumpendurchfluss von 30 Liter pro Minute der Luftgehalt in der Testlösung über eine Kompressionsmessung als Funktion der Zeit ermittelt. Dabei wurde die Zirkulation zunächst 15 Minuten ohne Entlüfter durchgeführt, dann die Zugabe des Entlüfters vorgenommen und die Zirkulation während 30 Minuten mit dem Entlüfter weitergeführt. Die Temperatur wurde auch hier bei 50°C gehalten, der Anfangsluftgehalt lag bei 1 % und die zugegebene Entlüftermenge betrug, in zwei Versuchsserien, entweder 125 ppm oder 375 ppm als Gewicht auf die Fasern bezogen. Es wurde entweder Konzentrat beigegeben, 5 % Emulsion (Gewichtsprozent) oder Suspension, erstere und letztere zu Vergleichszwecken.

Die entsprechenden Resultate sind in Figur 5 dargestellt. In Figur 5a) sind Vergleichsversuche alle unter Verwendung der gleichen Zugabemenge (375 ppm) dargestellt. Es kann erkannt werden, wie zunächst während der ersten 15 Minuten ein recht stabiler Luftgehalt (in relativen Prozenten) von 1 % vorliegt. Die Zugabe von Entlüfter nach 15 Minuten führt in allen Fällen zu einer Reduktion des Luftgehaltes. Auch hier sind die als Emulsionen zugegebenen Mittel als ausgezogene Linie dargestellt und die als Konzentrat zugegebenen Mittel als gestrichelte Linien. Aus der Grafik wird ersichtlich, dass generell die als Emulsion nach dem erfindungsgemässen Verfahren beigegebenen Mittel eine bessere Wirksamkeit zeigen und entsprechend zu einer grösseren Reduktion des Luftgehaltes führen. Es gibt zwar auch Systeme, welche als Konzentrat eine gewisse Wirksamkeit zeigen, wie bereits erläutert, soll aber das vorgeschlagene Verfahren gerade bewirken, dass die Auswahl des Mittel nicht derart strengen Kriterien unterworfen ist, damit eine Wirksamkeit gewährleistet sein kann.

In Figur 5 sind entsprechende Messungen für unterschiedliche Konzentrationen dargestellt. Des Weiteren ist die Wirksamkeit der Suspension dargestellt. Es kann erkannt werden, dass die Suspension (mit S bezeichnet) sowohl bei einer Konzentration von 375 ppm (immer ausgezogene Linie) als auch bei einer Konzentration von 125 ppm (immer gestrichelte Linie) eine gute Effizienz zeigt. Ganz klar kann erkannt werden, dass im Falle eines Konzentrates sowie auch einer Emulsion eine höhere Konzentration auch zu einer höheren Wirkung führt. Im vorliegenden Fall ist dabei die Wirksamkeit des Konzentrates vergleichbar mit der Wirksamkeit der Emulsion.

In einer kombinierten Betrachtungsweise, das heisst sowohl bei Berücksichtigung der Schaumbildung wie auch bei Berücksichtigung der Entlüftungswirkung zeigt es sich, dass das vorgeschlagene Verfahren der Herstellung einer Emulsion unmittelbar vor der Zugabe zum Prozesswasser eine wesentlich erhöhte Wirksamkeit zeigt und vor allem auch für ein extrem breites Spektrum von unterschiedlichen chemisch strukturierten Mitteln diese Wirksamkeit zu entfalten in der Lage ist.

### BEZUGSZEICHENLISTE

- 1: Behälter mit Entlüfter/Entschäumer
- 2: Behälter mit Wasser
- 3: Pumpe
- 4: Thermostat
- 5: Leitung von 1 zu 7
- 6: Leitung von 2 zu 7
- 7: Mischelement
- 8: Kontrollelement für Strömungsgeschwindigkeit
- 9: Druckmessung
- 10: Temperaturmessungen
- 11: Behälter mit Prozessflüssigkeit
- 12: Ventil
- 13: Dichtungen
- 14: poröse Glasfritte
- 15: Druckluftzuführung
- 16: Einführungsleitung
- 17: Heizelement in der Leitung 5
- 18: Heizelement in der Leitung 6
- 19: Heizelement für 7
- h: Höhe des gebildeten Schaumes
- z: Höhe der Prozessflüssigkeit

## Patentansprüche

1. Verfahren zur Zuführung eines Mittels zur Entlüftung/Entschäumung zu einer Prozessflüssigkeit insbesondere in einer Papiermaschine,
**dadurch gekennzeichnet, dass**
das Mittel vor Ort unter Zuhilfenahme wenigstens eines Mischelementes (7) in Wasser emulgiert und der Prozessflüssigkeit innerhalb weniger als 24 Stunden, vozugsweise weniger als 12 Stunden nach dem Emulgierprozess zugegeben wird
wobei das Mittel einen Schmelzpunkt von wenigstens 40 °C aufweist.

2. Verfahren nach Anspruch 1, **dadurch gekennzeichnet, dass** das Mittel einen Schmelzpunkt von wenigstens 45 °C aufweist, bevorzugtermassen einen Schmelzpunkt von wenigstens 50 °C.

3. Verfahren nach einem der vorhergehenden Ansprüche, **dadurch gekennzeichnet, dass** das Mittel aus einer Komponente oder einem Gemisch von wirksamen Komponenten mit einem Additiv zur Erhöhung des Schmelzpunkts besteht, wobei es sich bevorzugtermassen beim Additiv zur Erhöhung des Schmelzpunkt um einen Ester oder ein Amid handelt oder ein Gemisch solcher Substanzen, und wobei es sich insbesondere bevorzugt um eine oder mehrere Substanzen ausgewählt aus der folgenden Gruppe handelt: Polyolester von langkettigen Fettsäuren, insbesondere mono-, di-, tri-, tetra-Fettsäure-Pentaerythrit-ester, mono-, di-, tri-Fettsäure-Glycerinester, mono-, di-, tri-Fettsäure-Trimethylolpropan-ester, mono-, di-, tri-, tetra-, penta-, hexa-Fettsäure-Sorbitol-ester, Pentaerythritmonobehenat, Pentaerythritdibehenat, Pentaerythrittribehenat, Glycerinmonobehenat, Fettsäureamide, insbesondere Behenamid, Ethylendisterayldiamid oder Mischungen davon.

4. Verfahren nach einem der vorhergehenden Ansprüche, **dadurch gekennzeichnet, dass** das Mittel im wesentlichen aus einem oder mehreren Fettalkoholen besteht, gegebenenfalls in Kombination mit einem Additiv gemäß Anspruch 3, wobei bevorzugtermassen mehr als 50 Gewichtsprozent, insbesondere bevorzugtermassen mehr als 70 Gewichtsprozent, ganz besonders bevorzugterweise mehr als 90 Gewichtsprozent der Fettalkohole eine Kettenlänge mit wenigstens 16 Kohlenstoffatomen, insbesondere bevorzugt mit wenigstens 18 Kohlenstoffatomen, aufweist, wobei ganz besonders bevorzugt lineare gesättigte Fettalkohole mit 20, 22, 24 oder 26 Kohlenstoffatomen oder Mischungen aus solchen Fettalkoholen ohne Zusatz von den genannten Additiven eingesetzt werden.

5. Verfahren nach einem der vorhergehenden Ansprüche, **dadurch gekennzeichnet, dass** das Mittel eine Komponente mit folgender Struktur beinhaltet:
A-(XO)ₙ-B,
wobei diese Komponente das Anlagerungsprodukt von XO ausgewählt aus der Gruppe Ethylenoxid (EO) und/oder Propylenoxid (PO), mit n im Bereich von 1-10 an einen linearen gesättigten Alkylalkohol A ausgewählt aus der folgenden Gruppe ist: Stearylalkohol, Arachidylalkohol, Behenylalkohol oder einer Mischung dieser Alkohole, verestert mit einer linearen gesättigten Carbonsäure B ausgewählt aus der folgenden Gruppe: Stearinsäure, Arachinsäure, Behensäure oder einer Mischung aus diesen Carbonsäuren, wobei bevorzugtermassen n im Bereich von 2-6 liegt, wobei vorzugsweise n = 3, und wobei weiterhin bevorzugtermassen die Anzahl Kohlenstoffatome der Gruppen A und B nicht gleich ist oder dass es sich bei A um Behenylalkohol handelt und bei B um Behensäure, und wobei insbesondere bevorzugtermassen n = 6, A Stearylalkohol und B Behensäure ist.

6. Verfahren nach einem der vorhergehenden Ansprüche, **dadurch gekennzeichnet, dass** das Mittel der Prozessflüssigkeit innerhalb von weniger als 6 h, vorzugsweise weniger als 3 h, besonders vorzugsweise weniger als 1 h, insbesondere bevorzugt weniger als 30 min, und ganz besonders bevorzugt weniger als 15 min nach dem Emulgierprozess zugegeben wird.

7. Verfahren nach einem der vorhergehenden Ansprüche, **dadurch gekennzeichnet, dass** im Mischelement (7) eine mittlere Tröpfchengrösse (d₅₀) der in der Emulsion vorhandenen emulgierten Tropfen im Bereich von 0.1-80 µm, bevorzugt im Bereich von 0.5-50 µm erzeugt wird, wobei die mittlere Tröpfchengrösse (d₅₀) bevorzugtermassen im Bereich von 1-10 µm, bevorzugt im Bereich von 2-5 µm liegt.

8. Verfahren nach einem der vorhergehenden Ansprüche, **dadurch gekennzeichnet, dass** nach dem Mischelement (7) das Mittel zur Entlüftung/Entschäumung in Wasser in einer Konzentration von 0.1-80 Gewichtsprozent, bevorzugt 1-50 Gewichtsprozent, insbesondere bevorzugt 2-15 Gewichtsprozent vorliegt.

9. Verfahren nach einem der vorhergehenden Ansprüche, **dadurch gekennzeichnet, dass** das Mittel in einem Lagertank in flüssiger Form bereitgehalten wird und über bevorzugtermassen geheizte Leitungen dem bevorzugtermassen ebenfalls geheizten Mischelement (7) zugeführt wird, wobei weiterhin vorzugsweise das dem Mischelement (7) zugeführte Wasser ebenfalls vorgeheizt ist.

10. Verfahren nach einem der vorhergehenden Ansprüche, **dadurch gekennzeichnet, dass** das Mittel als Granulat, Pulver und/oder in Form von Pellets bereitgehalten wird, bedarfsentsprechend aufgeschmolzen wird und anschließend über bevorzugtermassen geheizte Leitungen dem bevorzugtermassen ebenfalls geheizten Mischelement (7) zugeführt wird, wobei weiterhin vorzugsweise das dem Mischelement (7) zugeführte Wasser ebenfalls vorgeheizt ist.

11. Verfahren nach einem der vorhergehenden Ansprüche, **dadurch gekennzeichnet, dass** das Mittel zur Entlüftung/Entschäumung einer Prozessflüssigkeit mit Fasergehalt in einer Menge zugegeben wird, so dass, gewichtsmässig bezogen auf Gewicht Fertigstoff je Produktionsschritt pro Zeiteinheit, das Mittel im Bereich von 10-350 ppm pro Zeiteinheit, bevorzugt im Bereich von 30-200 ppm pro Zeiteinheit, insbesondere bevorzugt im Bereich von 60-150 ppm pro Zeiteinheit, in die Prozessflüssigkeit eingetragen wird

12. Verfahren nach einem der vorhergehenden Ansprüche, **dadurch gekennzeichnet, dass** das Wasser für den Emulgierprozess wenigstens teilweise über die Prozessflüssigkeit zur Verfügung gestellt wird, wobei die Prozessflüssigkeit vorzugsweise bereits auf über Raumtemperatur erhöhter Temperatur vorliegt.

13. Verfahren nach einem der vorhergehenden Ansprüche, **dadurch gekennzeichnet, dass** es sich bei Mischelement (7) um einen Turbulenz-Mischer, bevorzugt um einen Turbulenzmikromischer handelt, um eine Düse, insbesondere eine Mikrostrahldispergierdüse, um eine Kugelpackung, um ein magnetisches Element oder um einen statischen Mischer oder eine Kombination derartiger Mischelemente und/oder
dass (7) eine Tröpfchengrössenverteilung der in der Emulsion vorhandenen emulgierten Tropfen erzeugt wird, bei welcher wenigstens 70 %, bevorzugt wenigstens 80 %, insbesondere bevorzugt wenigstens 90 % der Anzahl der Tropfen um eine mittlere Tröpfchengrösse (d₅₀) in einem Bereich zwischen d₅₀/10 bis d₅₀*10 verteilt sind.

14. Verfahren nach einem der vorhergehenden Ansprüche, **dadurch gekennzeichnet, dass** es sich beim Mittel um eine oder eine Mischung von mit Wasser nicht mischbaren, bevorzugt öligen und/oder oberflächenaktiven Substanzen, bevorzugt nicht-ionische oberflächenaktive Systeme, handelt, wobei insbesondere bevorzugt wenigstens eine der Komponenten eine Ester- und/oder Etherstruktur aufweist, bevorzugt eine ethoxylierte und/oder propoxylierte und/oder butoxylierte Struktur, wie bevorzugt Esterethoxylate, Esterpropoxylate, Esterethoxypropoxylate, Fettsäureethoxylate, Fettsäurepropoxylate, Fettsäureethoxypropoxylate, und/oder eine Esterstruktur wie Polyolester, Trimethylpropanester, Glycerinester, Glykolester, Pentaerythritester, Fettsäure-Fettalkohol-Ester, zuckerartige Ester, Sorbitanester und/oder Polyethylenglykolstruktur, und/oder eine Polypropylenglykolstruktur und/oder eine Fettalkohol-Struktur, Disäureester wie Adipinsäureester, Zitronensäure-Ester.

## Claims

1. Process for feeding an agent for deaerating / defoaming to a process liquid in particular in a paper machine,
**characterized in that**
the agent is locally emulsified with the aid of at least one mixing element (7) in water and the process liquid is added within less than 24 hours, preferably less than 12 hours after the emulsifying process,
whereas the agent exhibits a melting point of at least 40 °C.

2. Process according to claim 1, **characterized in that** the agent exhibits a melting point of at least 45 °C, preferably a melting point of at least 50 °C.

3. Process according to one of the preceding claims, **characterized in that** the agent consists of a component or a mixture of effective components with an additive for increasing the melting point, whereas preferably the additive for increasing the melting point is an ester or an amide or a mixture of such substances, and whereas in particular preferably is one or more substances chosen from the following group: polyol esters of long-chain fatty acids; in particular mono-, di-, tri-, tetra- fatty acid esters of pentaerythritol; mono-, di-, tri- fatty acid esters of glycerol ; mono-, di-, tri- fatty acid esters of trimethylolpropane ; mono-, di-, tri-, tetra-, penta-, hexa fatty acid esters of sorbitole ; pentaerythritol monobehenate, pentaerythritol dibehenate, pentaerythritol tribehenate, glycerol monobehenate, fatty acid amides, in particular behenamide, ethylene disterayl diamide or mixtures thereof.

4. Process according to one of the preceding claims, **characterized in that** the agent essentially consists of one or more fatty alcohols, where applicable in combination with an additive according to claim 3, whereas preferably more than 50 weight percent, in particular preferably more than 70 weight percent, especially preferably more than 90 weight percent of the fatty alcohols exhibit a chain length of at least 16 carbon atoms, in particular preferably of at least 18 Carbon atoms, whereas especially preferably linear saturated fatty alcohols having 20, 22, 24 or 26 carbon atoms or mixtures of such fatty alcohols are used without addition of the named additives.

5. Process according to one of the preceding claims, **characterized in that** the agent includes a component having the following structure:
A-(XO)ₙ-B,
whereas that component is an addition product of XO chosen from the group of: Ethylene oxide (EO) and/or propylene oxide (PO), with n being in the range of 1-10, and a linear saturated Alkylalcohol A is chosen from the following group: stearyl alcohol, arachidyl alcohol, behenyl alcohol or a mixture of these alcohols, esterified with a linear saturated carboxylic acid B chosen from the following group: stearic acid, arachidic acid, behenic acid or a mixture of these carboxylic acids, whereas preferably n is in the range of 2-6, whereas preferably n = 3, and whereas further preferably the number of carbon atoms of the groups A and B are not identical or that A is behenyl alcohol and B is behenic acid, und whereas in particular preferably n = 6, A is stearyl alcohol and B behenic acid.

6. Process according to one of the preceding claims, **characterized in that** the agent is added to the process liquid within less than 6 h, preferably less than 3 h, especially preferably less than 1 h, in particular preferably less than 30 min, and most preferably less than 15 min, after the emulsifying process.

7. Process according to one of the preceding claims, **characterized in that** in the mixing element (7) an average droplet diameter (d₅₀) of the emulsified drops present in the emulsion is produced in the range of 0.1-80 µm, preferably in the range of 0.5-50 µm, whereas the average droplet diameter (d₅₀) preferably lies in the range of 1-10 µm, preferably in the range of 2-5 µm.

8. Process according to one of the preceding claims, **characterized in that** after the mixing element (7) the agent for deaerating/defoaming is present in water in a concentration of 0.1-80 weight percent, preferably 1-50 weight percent, in particular preferably 2-15 weight percent.

9. Process according to one of the preceding claims, **characterized in that** the agent is held in a storage tank in liquid form and is fed to the preferably also heated mixing element (7) through preferably heated pipes, whereas further preferably the water fed to the mixing element (7) is also preheated.

10. Process according to one of the preceding claims, **characterized in that** the agent is held as granulate, powder and/or in form of pellets, is molten depending on the need thereto and subsequently is fed to the preferably also heated mixing element (7) through preferably heated pipes, whereas the water fed to the mixing element (7) is also further preferably preheated.

11. Process according to one of the preceding claims, **characterized in that** the agent for deaerating/defoaming of a process liquid having a fibre content is added in an amount such that, relative to the weight of the weight of finished material per production step per unit time, the agent is entered in the range of 10-350 ppm per unit time, preferably in the range of 30-200 ppm per unit time, in particular preferably in the range of 60-150 ppm per unit time, to the process liquid.

12. Process according to one of the preceding claims, **characterized in that** the water for the emulsifying process is provided at least partially by the process liquid, whereas the process liquid is already available preferably at a temperature exceeding room temperature.

13. Process according to one of the preceding claims, **characterized in that** the mixing element (7) is a turbulence mixer, preferably a turbulence micro mixer, a nozzle, in particular micro jet dispersing nozzle, a sphere packing, a magnetic element or a static mixer or a combination of such mixing elements and/or that (7) a droplet size distribution of drops present and emulsified in the emulsion is produced, in which at least 70 %, preferably at least 80 %, in particular preferably at least 90 % of the number of drops are distributed around an average droplet diameter (d₅₀) in the range of between d₅₀/10 to d₅₀*10.

14. Process according to one of the preceding claims, **characterized in that** the agent is a or a mixture of water-insoluble, preferably oily and/or surface active substances, preferably non-ionic surface active systems, whereas in particular preferably at least one of the components exhibits an ester- and/or ether structure, preferably a ethoxylated and/or propoxylated and/or butoxylated structure, such as preferably esterethoxylates, esterpropoxylates, esterethoxypropoxylates, fatty acid ethoxylates, fatty acid propoxylates, fatty acid ethoxypropoxylates, and/or an ester structure such as polyol esters, trimethylpropane esters, glycerine esters, glycol esters, pentaerythritol ester, fatty acid / fatty alcohol esters, sugar-type esters, sorbitane esters and/or polyethylene glycol structures, and/or a polypropylene glycol structure and/or eine fatty alcohol structure, diacid ester such as adipic acid ester, citric acid ester.

## Revendications

1. Procédé pour conduire un agent pour désaérer/démousser vers un liquide de processus particulièrement dans une machine à papier,
**caractérisé en ce que**
l'agent est émulsionné sur place dans l'eau avec l'aide d'au moins un élément de mélange (7) et le liquide de processus est ajouté sous moins de 24 heures, préférablement sous moins de 12 heures après le procédé d'émulsion
où l'agent présente un point de fusion d'au moins 40 °C.

2. Procédé selon la revendication 1, **caractérisé en ce que** l'agent présente un point de fusion d'au moins 45 °C, préférablement un point de fusion d'au moins 50 °C.

3. Procédé selon l'une des revendications précédentes, **caractérisé en ce que** l'agent se compose d'une composante ou d'un mélange de composantes efficaces avec un additif pour augmenter le point de fusion, où l'additif pour augmenter le point de fusion est préférablement un ester ou un amide ou un mélange de telles substances, et où il s'agit particulièrement préférablement d'une ou plusieures substances choisies du groupe suivant: ester d'acide gras à chaine longue et de polyol, particulièrement mono-, di-, tri-, tetra- ester d'acide gras et de pentaérythritol, mono-, di-, tri- ester d'acide gras et de glycérine, mono-, di-, tri- ester d'acide gras et de triméthylolpropane, mono-, di-, tri-, tetra-, penta-, hexa- ester d'acide gras et de sorbitole, monobéhénate de pentaérythritol, dibéhénate de pentaérythritol, tribéhénate de pentaérythritol, monobéhénate de glycérine, amide d' acide gras, particulièrement de amide de béhénate, diamide de ethylènedistéaryle ou mélanges de ceux-ci.

4. Procédé selon l'une des revendications précédentes, **caractérisé en ce que** l'agent se compose essentiellement d'un ou plusieurs alcools gras, le cas échéant en combinaison avec un additif selon la revendication 3, où préférablement plus de 50 pourcent en masse, particulièrement préférablement plus de 70 pourcent en masse, plus préférablement plus de 90 pourcent en masse des alcools gras présentent une longueur de chaine d'au moins 16 atomes de carbone, particulièrement préférablement d'au moins 18 atomes de carbone, où très particulièrement préférablement alcool gras saturée linéaire ayant 20, 22, 24 ou 26 atomes de carbone ou des mélanges de tels alcools gras sans addition des additifs nommés sont utilisés.

5. Procédé selon l'une des revendications précédentes, **caractérisé en ce que** l'agent comprend une composante ayant la structure suivante:
A-(XO)ₙ-B,
où cette composante est le produit d'addition de XO choisi du groupe oxyde d'éthylène (EO) et/ou oxyde de propylène (PO), avec n dans le domaine de 1-10 et l'alcool d'alkyle A linéaire saturé est choisi du groupe suivant: alcool stéarylique, alcool arachidylique, alcool béhénylique ou un mélange de ces alcools, esterifiés avec un acide carboxylique B linéaire saturé choisis du groupe suivant: acide stéarique, acide arachidique, acide béhénique ou un mélange de ces acides carboxyliques, où préférablement n est situé dans le domaine de 2-6, où préférablement n = 3, et où d'avantage préférablement le nombre d'atomes de carbone des groupes A et B n'est pas identique ou que il s'agit, dans le cas de A d'un alcool béhénylique et dans le cas de B d'acide béhénique, et où particulièrement préférablement n = 6, A est l'alcool stéarylique et B est l'acide béhénique.

6. Procédé selon l'une des revendications précédentes, **caractérisé en ce que** l'agent du liquide de processus est ajouté sous moins de 6 h, préférablement moins de 3 h, particulièrement préférablement moins de 1 h, particulièrement préférablement moins de 30 min, et très particulièrement préférablement moins de 15 min après le procédé d'émulsion.

7. Procédé selon l'une des revendications précédentes, **caractérisé en ce que** dans l'élément de mélange (7), un diamètre moyen des gouttelettes (d₅₀) des gouttes émulsifiées présentes dans l'émulsion dans le domaine de 0.1-80 µm, préférablement dans le domaine de 0.5-50 µm, est généré, où le diamètre moyen des gouttelettes (d₅₀) se situe préférablement dans le domaine de 1-10 µm, préférablement dans le domaine de 2-5 µm.

8. Procédé selon l'une des revendications précédentes, **caractérisé en ce que** après l'élément de mélange (7) l'agent pour désaérer/démousser est présent dans l'eau dans une concentration de 0.1-80 pourcent en masse, préférablement 1-50 pourcent en masse, particulièrement préférablement 2-15 pourcent en masse.

9. Procédé selon l'une des revendications précédentes, **caractérisé en ce que** l'agent est tenu à disposition dans un réservoir de stockage en forme liquide et est préférablement acheminé à travers de tuyaux chauffés à l'élément de mélange (7) préférablement également chauffé, où d'avantage préférablement l'eau acheminée vers l'élément de mélange (7) est également préchauffée.

10. Procédé selon l'une des revendications précédentes, **caractérisé en ce que** l'agent est tenu à disposition en forme de granulé, poudre et/ou en forme de pellets, si besoin est fondu et est acheminé subséquemment vers l'élément de mélange (7), préférablement également chauffé, à travers de tuyaux préférablement chauffés, où d'avantage préférablement l'eau acheminée vers l'élément de mélange (7) est également préchauffée.

11. Procédé selon l'une des revendications précédentes, **caractérisé en ce que** l'agent pour désaérer/démousser un liquide de processus ayant un contenu de fibre in est ajouté dans une quantité telle que, en relation au poids du produit fini, par étape de production par unité de temps, l'agent est introduit dans le liquide de processus dans le domaine de 10-350 ppm par unité de temps, préférablement dans le domaine de 30-200 ppm par unité de temps, particulièrement préférablement dans le domaine de 60-150 ppm par unité de temps.

12. Procédé selon l'une des revendications précédentes, **caractérisé en ce que** l'eau pour le procédé d'émulsion est mise à disposition au moins partiellement à travers le liquide de processus, où le liquide de processus est déjà disponible préférablement à une température supérieure à la température ambiante.

13. Procédé selon l'une des revendications précédentes, **caractérisé en ce que** es l'élément de mélange (7) est un mélangeur à turbulence, préférablement un micro-mélangeur à turbulence, une buse, particulièrement une buse de dispersion à micro-jet, garnissage à sphères, un élément magnétique ou un mélangeur statique ou une combinaison de tels éléments de mélange et/ou que (7) une distribution de diamètre des goutelettes des gouttes émulsifiées présentes dans l'émulsion est générée, dans laquelle au moins 70 %, préférablement au moins 80 %, particulièrement préférablement au moins 90 % du nombre de gouttes sont distribuées autour d'un diamètre moyen des goutelettes (d₅₀) dans un domaine entre d₅₀/10 à d₄₀*10.

14. Procédé selon l'une des revendications précédentes, **caractérisé en ce que** l'agent est une, ou un mélange de, substances immiscibles à l'eau, préférablement huileuse et/ou tensioactive, préférablement un système non-ionique tensioactif, où particulièrement préférablement au moins une des composantes présente une structure d'ester et/ou d'ether, préférablement une structure éthoxylée et/ou propoxylée et/ou butoxylée, comme préférablement éthoxylate d'ester, propoxylate d'ester, ester d'éthoxypropoxylate, éthoxylate d'acide gras, propoxylate d'acide gras, ethoxypropoxylate d'acide gras, et/ou une structure d'ester comme ester de polyol, ester de trimethylpropane, ester de glycérine, ester de glycol, ester de pentaérythritol, ester d'acide gras - alcool gras, ester du type sucre, ester de sorbitane et/ou structure de polyéthylène glycol, et/ou eine structure de polypropylène glycol et/ou une structure d'alcool gras, esters d'acides dicarboxyliques comme l'ester d'acide adipique, l'ester d'acide citrique.
